# EUROPEAN PATENT APPLICATION

(11) **EP 2 963 632 A1**
(43) Date of publication of application: **06.01.2016**
(21) Application number: 14175501.7
(22) Date of filing: 03.07.2014
(51) Int. Cl.: G08G 1/16, B60W 30/095, G08G 1/0962, B60W 50/14

(54) **Manoeuvre assistance**

(71) Applicant: Application Solutions (Electronics and Vision) Limited, Lewes, East Sussex BN7 2 AQ (GB)
(72) Inventor: Fey, Wolfgang, 88131 Bodolz (DE); Mocek, Vaclav, Seaford, Sussex BN25 2PU (GB); Reade, Gideon, Worthing, Sussex BN13 3NG (GB); Saward, Ian, Lewes, Sussex BN7 1BH (GB); Uppara, Ravikanth, Seaford, Sussex BN25 3ER (GB); Weller, Dave, Lewes, Sussex BN8 6DF (GB); Hantsch, Eric, Brighton, Sussex BN1 3RQ (GB)
(74) Representative: Büchner, Jörg

(57) **Abstract**

In one aspect the invention provides notification of at least one safety factor for at least one candidate area relating to safety of the vehicle moving to a potential road position associated with the candidate area.

In some embodiments the notification is provided to a user, for example a driver, by way of a display or using an audio or haptic interface. As a result, in some embodiments the driver can be notified about the safety of possible future positions of the car. A driver is therefore provided with information enabling the driver to assess the safety of a future position and manage manoeuvres of the car in accordance with the driver acceptance of risk. In some embodiments the feasibility of lane changes from the current starting position can be determined by the driver based on the notification of the safety of the future position, and on the willingness of the driver to accept risk.

In some embodiments the notification is provided to a vehicle system, such as a lane departure warning system. This enables information about the safety of vehicle manoeuvres to be taking into consideration by other vehicle systems.

## Description

### Technical Field

The invention relates to a method and apparatus providing notification of the safety of potential future positions resulting from manoeuvres of a vehicle.

### Background

Accidents, near misses and delays can occur as a result of drivers failing to estimate relative speeds of other vehicles and safe clearances between vehicles accurately during manoeuvres on highways and at junctions. One situation in which driver errors often occur is during overtaking manoeuvres.

WO2013/065234 describes a vehicle navigation system with functionality for recommending lane changes. This document describes overlaying arrows recommending lane changes onto a display of an image captured by a forward facing camera mounted on the vehicle.

US2014/0067250 relates to a lane change assist information visualisation system that provides overtaking assistance to a driver. In response to a detected intention of the driver to change lanes, an overtaking profile is established for the driver of the vehicle. The overtaking profile provides instructions for a driver in terms of a change in speed and timing of the lane change to enable the driver to safely perform an overtaking manoeuvre.

Although the prior art systems provide instructions to a driver to help the driver to change lanes safely, these systems do not provide assistance in assessing the safety of potential future positions of a vehicle.

The present invention seeks to alleviate or ameliorate the drawbacks in the prior art, and to provide a novel method and apparatus.

### Summary

In accordance with one aspect of the invention, there is provided a method comprising creating, from vehicle environment information sources, a vehicle environment model for a vehicle, the vehicle environment model containing information about road features and information about other vehicles in the vehicle environment; identifying at least one safety factor for at least one candidate area, representing a respective potential road position of the vehicle in the vehicle environment within the vehicle environment model; and providing notification of at least one safety factor for at least one candidate area relating to safety of the vehicle moving to the potential road position associated with the candidate area.

In accordance with a second aspect of the invention, there is provided an apparatus comprising: a vehicle environment model store for storing a vehicle environment model; a candidate area store for storing safety factors for candidate areas of the vehicle environment model; a modelling function, arranged to receive vehicle environment information from at least one vehicle environment information source and to create a vehicle environment model for a vehicle, the modelling function being coupled to the vehicle environment model store to store vehicle environment model therein; a safety factor identifying function, coupled to the vehicle environment model store and arranged to identify a safety factor for one or more candidate areas within the vehicle environment model representing respective potential road positions for the vehicle in the vehicle environment, and coupled to the candidate area store to store the identified safety factors for candidate areas; and a notification function coupled to the safety factor store and arranged to providing notification of a safety factor of at least one candidate area in the vehicle environment model.

The use of systems implementing embodiments of the invention leads to improved situational awareness on highways since safety factors associated with future potential positions of a vehicle are identified and notified.

The safety factors can at least in part reflect the probability of conflict between a future position of a vehicle, and the probable future positions of other vehicles in the vehicle environment.

As a result, in some embodiments the driver can be notified about the safety of possible future positions of the car. A driver is therefore provided with information enabling the driver to assess the safety of a future position and manage manoeuvres of the car in accordance with the driver acceptance of risk. In some embodiments the feasibility of lane changes from the current starting position can be determined by the driver based on the notification of the safety of the future position, and on the willingness of the driver to accept risk.

In some embodiments the notification is provided to a vehicle system, such as a lane departure warning system. This enables information about the safety of vehicle manoeuvres to be taken into consideration by other vehicle systems.

Embodiments of the disclosure are described below, with reference to the accompanying drawings, by way of example only.

### Brief Description of the Drawings

Figure 1 is a picture of an annotated image.
Figure 2 is a flow chart showing a method in accordance with one embodiment.
Figure 3 is a schematic overhead view of road positions of vehicles illustrating the operation of one embodiment.
Figure 4 is an annotated image corresponding to the vehicle configuration shown in Figure 3.
Figure 5 is a block diagram showing one embodiment of an apparatus suitable for implementing the method shown in Figure 2.

### Detailed Description

Embodiments of the invention provide notification of the safety of potential future positions of a vehicle and so enable the safety of potential future positions of a vehicle to be assessed.

Some embodiments of the invention provide assistance to drivers in carrying out a manoeuvre, for example in deciding on suitable lane changes. Other embodiments of the invention co-operate with other vehicle systems in order to provide more accurate notification of the safety of manoeuvres that are actually being carried out or might be carried out, or that are possible from the current position.

Some embodiments of the invention use one or more video cameras mounted on a vehicle to capture images of the vehicle environment. The images captured by the camera may be analysed, for example to identify highway lanes, other vehicles, the relative speed of other vehicles, and other obstacles in the vehicle environment. In some embodiments, information about the vehicle environment might also be obtained from: the detection of brake lights; direction indicators; speed limits from signs; Global Positioning System (GPS) data; or short-range radio communication between vehicles.

This information about the vehicle environment may be used to evaluate the safety of future positions of the vehicle, and the results of the evaluation can be notified. As a result, in some embodiments the driver can be notified about the safety of possible future positions of the car. A driver is therefore provided with information enabling the driver to assess the safety of a future position and manage manoeuvres of the car in accordance with the driver acceptance of risk. In some embodiments the feasibility of lane changes from the current starting position can be determined by the driver based on the notification of the safety of the future position, and on the willingness of the driver to accept risk.

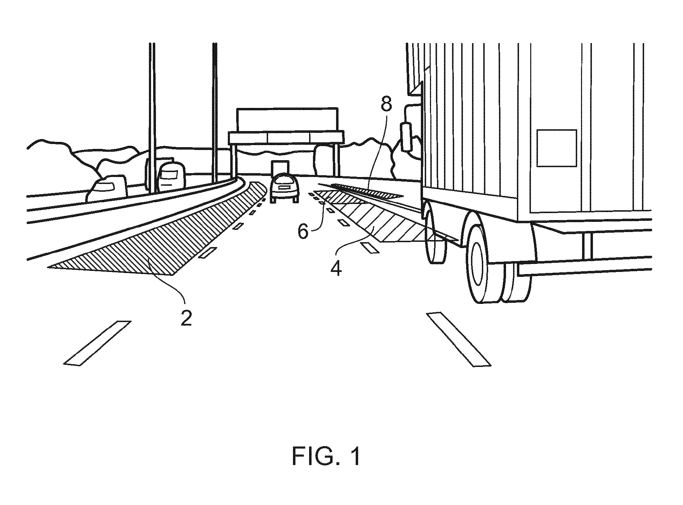

A safety factor associated with at least one manoeuvre to a future position may be presented on a display. Figure 1 is a picture of an image that has been annotated in this way.

Figure 1 illustrates the annotation of an image captured by a camera mounted on a vehicle travelling in the third lane of a four lane motorway, in a country in which vehicles drive on the right hand side of the road.

In the annotated image shown in Figure 1, area 2 is an area in the overtaking lane that can be entered safely.

In the annotated image shown in Figure 1, area 4 is an area in the next inside lane that cannot be entered safely, in this case because there is a significant chance of colliding with the truck or of causing the truck to brake sharply.

In the annotated image shown in Figure 1, area 6 and area 8 are areas in the next inside lane and in the far right lane, respectively, that it may be safe to enter, with extra driver care, depending upon external conditions, perhaps with some likelihood of reduced clearances from other vehicles.

The display could additionally be annotated to indicate if a lane change is best made with deceleration, constant speed, or acceleration.

In another embodiments, a safety factor associated with at least one lane change can be used in conjunction with a lane departure warning system (LDW system) in order to reduce the incidence of false or unnecessary alarms from the lane departure warning system (LDW system) and/or to increase the prominence of lane departure warning system (LDW system) alarms, depending upon the analysed result of departing from lane.

In some embodiments an input interface such as a touch screen could allow a future position requiring a lane change to be selected and, in response, the steering, engine, brakes and direction indicators of the vehicle could be operated automatically to change lane to the selected future position.

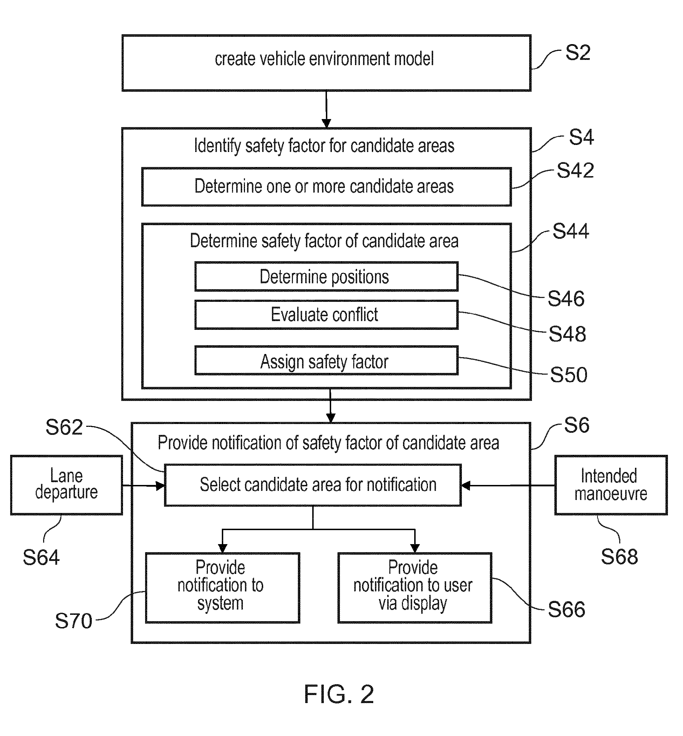

Figure 2 is a flow chart showing a method in accordance with embodiments of the invention.

In a first step s2 of the method shown in Figure 1, a vehicle environment model for a vehicle is created from vehicle environment information sources.

The created vehicle environment model contains information about road features and information about other vehicles in the vehicle environment. For example, the vehicle environment model would typically contain information about road features, such as bends, junctions, the number of lanes, and the relative position of the vehicle with respect to the road. The vehicle environment model would also typically include information about the position and velocity of other vehicles relative to the vehicle or the road.

The information in the vehicle environment model can be represented within the model in a number of different ways, as will be understood by a skilled person. In one embodiment, a database may be used to store information such as position and velocity information attributes of different vehicles or road features within the vehicle environment model.

The information in the vehicle environmental model is created from vehicle environment information sources. Typically images from a camera mounted on a vehicle can be analysed to determine the position of other vehicles relative to the vehicle and/or to determine relative position of road features relative to the vehicle. In some embodiments, road boundaries and/or lane boundaries may be determined from satellite navigation system data. Images from a camera mounted on a vehicle can be analysed to determine the velocity of other vehicles relative to the vehicle and/or to determine relative velocity of the vehicle relative to road features. In other embodiments, information from other vehicle environment information sources, including but not limited to radar measurements, detection of brake lights, detection of direction indicators, speed limits from signs, Global Positioning System (GPS) data, and short range radio systems, may be collected and used to create or refine information in the vehicle environment model.

In a second step s4 of the method shown in Figure 1, a safety factor is identified for one or more candidate areas within the vehicle environment model, each candidate area representing a respective potential road position for the vehicle in the vehicle environment.

Candidate areas in the vehicle environmental model correspond to or represent respective possible future road positions for the vehicle in the vehicle environment. In some embodiments the candidate area may be considered as limited to a particular vehicle position. In other embodiments, the candidate area may extend over a greater area than a single vehicle position. For example, in embodiments in which overtaking assistance is provided, the candidate area may be the whole or part of a lane of the road.

In step s42, one or more candidate areas may be determined. Typically, this might be achieved by determining at least one potential future position of the vehicle in the vehicle environment model, and then creating a candidate area in the vehicle environment model corresponding to a respective potential future position of the vehicle in the vehicle environment model.

In a pro-active mode, candidate areas may be established from analysis of vehicle movements using information in the vehicle environment model.

In a reactive mode, a candidate area may be identified or established in response to detection of an intended or of an actual movement of the vehicle. For example, in one embodiment an intended movement of the vehicle is detected from activation of a driver controllable system, such as the activation of direction indicators of the vehicle. In other embodiments, the actual movement of the vehicle is detected from a lane departure signal received from a system monitoring lane changes of the vehicle.

In step s44, one or more safety factors associated with the candidate area are determined.

A safety factor of a candidate area is any factor that relates to the safety of the vehicle entering that candidate area in the future. The safety factor may be an indication, selected from a set of at least two ranked indications, of the desirability of the vehicle moving to the future position corresponding to the candidate area. In the simplest case, a safety factor may be a simple safe/not safe indication. However, in other embodiments the safety factor may indicate that the candidate area should be entered with care.

In some embodiments, the safety factor may relate to actions that are recommended or required to improve the safety profile of the movement of the vehicle to the candidate area. For example, a safety factor may relate to the increase or decrease or maintenance of speed required to enable the vehicle to move to a road position corresponding to the candidate area.

In some embodiments, the movement of vehicles within the vehicle environment model is evaluated to determine the effect on other vehicles of the movement of the vehicle to a road position in the vehicle environment corresponding to the candidate area. In particular, it can be determined whether another vehicle will be required to slow down or to change direction as a result of the movement of the vehicle to a position in the vehicle environment corresponding to a candidate area in the vehicle environment model.

In some embodiments, the safety factor of the candidate area is determined at least in part by taking into account the effect of the corresponding movement of the vehicle on other vehicles in the vehicle environment.

Thus, in step s 46, the projected future positions of other vehicles within the vehicle environment model are determined.

In step s48, conflict between the projected future position of other vehicles within the vehicle environment model and the candidate area is evaluated.

In step s50, a safety factor can be assigned to the candidate area depending on the evaluated conflict. If the vehicle can move to the future position associated with the candidate area without hitting another vehicle, or being hit by another vehicle, or causing another vehicle to slow down, there is no conflict between the projected future position of other vehicles within the vehicle environment model and the candidate area.

Some degree of conflict may be established if any of the vehicles in the vehicle environment is required to change speed to avoid a collision. Generally the situation in which another vehicle is required to change speed to avoid a collision would be considered less desirable than a situation in which the vehicle in which an embodiment of the present invention is implemented (the "ego vehicle") is required to change its speed to avoid a collision. In some embodiments, a determination that a change of speed is necessary to move to a future position without conflict with other vehicles results in the assignment of an indication of the increase or decrease or maintenance of speed required to enable the vehicle to move to a road position corresponding to the candidate area as a safety factor.

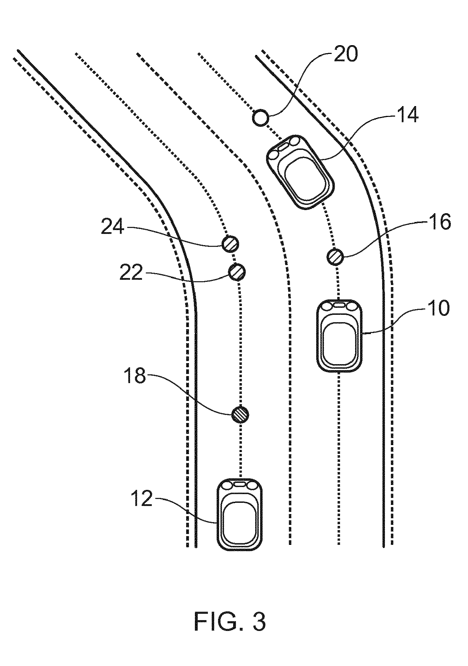

Figure 3 is a schematic overhead view of road positions of vehicles illustrating the operation of one embodiment of the present invention. Figure 3 shows a two lane highway in which vehicles drive on the right hand side of the road, such as in Europe or North America.

The ego vehicle in the illustrative scenario shown in Figure 3 is vehicle 10 in the inside lane. A first vehicle 12 is in the overtaking lane and is travelling faster than the ego vehicle 10. Second vehicle 14 is ahead of the ego vehicle 10 in the inside lane, and is travelling more slowly than the ego vehicle 10.

The dashed lines represent the highway lane markings, as observed by observation systems on the ego vehicle 10. The dotted lines represent the centres of the lanes, the most likely vehicle tracks, as described by on-car navigation data in the exemplary embodiment. The solid side lines represent the road width as also described by the same data source.

The vehicles 10, 12, 14 are shown in their positions at a current time point T0.

The position, velocity and acceleration, and other properties of the first vehicle 12 and second vehicle 14 at time T0 may be measured by systems on the ego vehicle 10, relative to the ego vehicle 10. These systems may be cameras or radar or other technologies. By analysing current positions and previous measurements, and the road or lane geometry, and potentially other factors such as direction indicators or car-to-car data streams, the positions of the first vehicle 12 and second vehicle 14 at subsequent time points T1, T2, T3, and so on can be estimated.

The expected position of each car at a time T1 slightly later than time T0 can be determined from the information relating to the velocity and position of the first vehicle 12 and second vehicle 14 and any other available data. The expected position of the ego vehicle 10 at the slightly later time T1 is shown as position point 16. The expected position of the first vehicle 12 at the slightly later time T1 is shown as position point 18. The expected position of the second vehicle 14 at the slightly later time T1 is shown as position point 20. As would be expected, the distance from the present position to the expected position points 16, 18, 20 for the vehicles varies depending upon the current velocity of the respective vehicle.

From this analysis it can be appreciated that the ego vehicle 10 is approaching the second vehicle 14 from behind and will need to change lane or slow down.

There are three potential position points A, B, C for the ego vehicle 10, representing possible manoeuvres the driver could make:
Position point 16 represents the position of the ego vehicle 10 at time T1 with no lane change, as discussed previously.
Position point 22 represents the position of the ego vehicle 10 at time T1 with a lane change and no speed change.
Position point 24 represents the position of the ego vehicle 10 at time T1 with a lane change and increased speed.

Each position point is analysed to consider the safety outcome at future times T2, T3, etc. arising from the respective manoeuvre required for the vehicle to occupy the position point at time T1

In this example, if the ego vehicle 10 moves to position point 16 at time T1, then at time T3 the ego vehicle 10 must slow down, or else at time point T4 the ego vehicle 10 will impact the second vehicle 14.

If instead the ego vehicle 10 moves to position point 22, it can be predicted that first vehicle 12 will have to slow down at time T4, or the first vehicle 12 will impact the ego vehicle 10 at time T5.

If instead the ego vehicle 10 moves to position point 24, safe and courteous clearances are maintained at all time periods T3, T4, T5.

So, in this example, it might be considered that a lane change to position point 22 is feasible, but potentially not ideal because it forces first vehicle 12 to make a correction, and a lane change to position point 24 with acceleration is feasible and ideal because clearances are maintained with no effect on other vehicles.

In this case the candidate area corresponding to point 16 might be allocated either a "not safe" safety factor, or may be allocated a "safe with care" safety factor together with a further safety factor indicating a reduction in speed. The candidate area corresponding to point 22 might be allocated a "safe but not ideal" safety factor. The candidate area corresponding to point 24 might be allocated a "safe with care" safety factor together with a safety factor indicating an increase in speed.

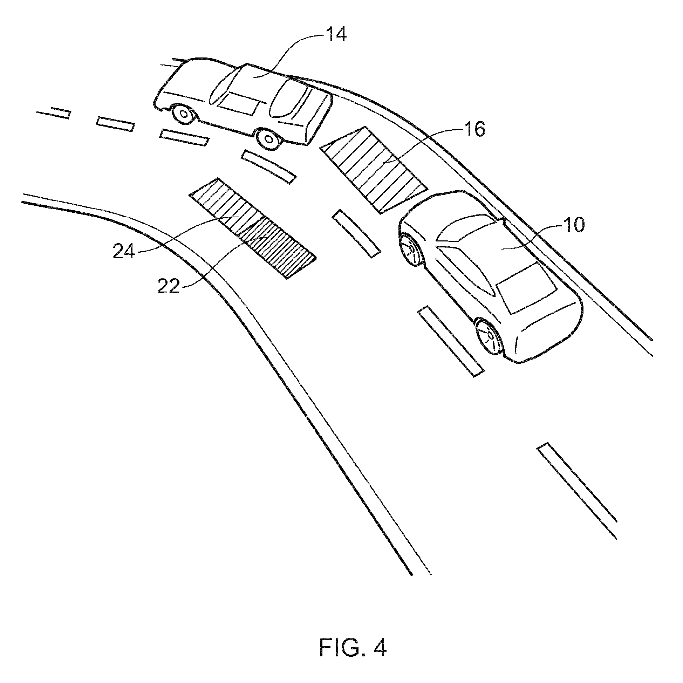

Figure 4 is an example of an annotated image corresponding to the vehicle configuration shown in Figure 3. Figure 4 shows the ego vehicle 10 and the second vehicle 14 and candidate areas corresponding to the position points 16, 22 and 24 have been overlaid on the image. The safety factors for each of the three illustrated candidate areas are represented by different hatchings of the respective candidate areas.

In a further step s6 of Figure 2, notification of the safety factor of at least one candidate area in the vehicle environment model is provided.

In some embodiments, in step s62 one or more candidate areas may be selected from a number of candidate areas for notification of the safety factor.

For example, in embodiments where two or more candidate areas are analysed to determine the effect on other vehicles, one of the candidate areas may be selected as a recommended candidate area. In some embodiments, safety factors of only the recommended candidate area are notified, but in other embodiments safety factors of more than one recommended candidate area may be notified, possibly with an indication as to which of the candidate areas is recommended. Alternatively, the safety factors for two or more candidate areas may be notified without an accompanying recommendation.

In embodiments where a safety factor for a candidate area comprises an indication selected from a set of at least two ranked indications of the safety of the future position associated with the candidate area or of the vehicle moving to the future position associated with the candidate area, a recommended candidate area can be selected based on the relative ranking of the respective ranked indications. In the case above, the ranking might be considered to be: "safe"; "safe with care"; "safe but not ideal"; and "not safe".

A candidate area may be selected in step s62 in response to detection of an actual movement of the vehicle. A lane departure notification received from a lane departure warning system of the vehicle in step s64 can be used to select a candidate area for notification in step 62.

If a candidate area identified from a lane departure notification has already had one or more safety factors determined, the safety factors for the selected candidate area can be notified to the user in step s66.

Alternatively, if a candidate area identified from a lane departure notification has not already been identified, the step s44 of identifying one or more safety factors for the candidate area must be carried out for the newly identified candidate area before notification of the safety factor for selected candidate area to the user in step s66, as will be understood by a skilled person.

Alternatively, the lane departure notification received in step s64 may be modified using the safety factor of the corresponding candidate area before presentation to the user in step s66. If a lane departure warning that is associated with a candidate area having a safety factor indicating a safe lane change is received, the lane departure warning may be displayed in a manner that notifies the user of this fact, or may be suppressed altogether. Alternatively if a lane departure warning that is associated with a candidate area having a safety factor indicating an unsafe lane change is received, the lane departure warning may be displayed in a manner that notifies the user of this fact.

A candidate area may be selected in step s62, in response to detection of an intended movement of the vehicle in step s68. For example, in one embodiment an intended movement of the vehicle is detected in step s68 from activation of a driver controllable system, such as the activation of direction indicators of the vehicle.

Again, if a candidate area, identified in response to detection of an intended movement of the vehicle in step s68, has already had one or more safety factors determined, the safety factors for the selected candidate area can be notified to the user in step s66.

Alternatively, if a candidate area, identified in response to detection of an intended movement of the vehicle in step s68, has not already had one or more safety factors determined, the step s44 of identifying one or more safety factors for the candidate area must be carried out for the newly identified candidate area before notification of the safety factor for selected candidate area to the user in step s66, as will be understood by a skilled person.

The step of providing notification to the user in step s66 may be carried out using a graphical display. Alternatively notification to the user may be made using indicators on the dashboard or on the A-pillars of the vehicle in a similar manner to existing blind spot warnings, using colour codes or shapes.

In some embodiments, haptic or audio feedback can be used to present notification of safety factors to a user. For example audio feedback if the driver started to make an unsafe lane change, or to indicate a lane change to an unsafe lane.

In some embodiments, the safety factor of the candidate area is notified by providing notification of the safety factors to a system in step s70. The system may for example be a lane departure warning system, which is able to use the notified safety factors to determine whether a detected movement between lanes is a safe manoeuvre.

In some embodiments, the notification of the safety factor of the candidate area can be made by displaying information associated with the safety factor to a user in step s68.

The safety factors can be displayed in different formats.

In some embodiments the safety factors might be displayed on a head-up-display projection onto the windscreen. The safety factors may be displayed as icons or text, or may be displayed as an overlay by head-up-display projection onto the windscreen. As this is then an overlay onto the driver's real view, the head-up-display may need to track the eye position of the driver in order to place the overlays accurately.

In some embodiments the safety factors might be displayed using an on-head display, such as Google Glasses. Again, it is possible to display the safety factors as icons or text or as an overlay on the Google Glasses.

In some embodiments, the safety factors may be displayed by overlaying them on an image from a forward facing camera mounted on the vehicle.

The use of overlay washes over the extent of the candidate areas may be useful to indicate safety factors. Different colours or patterns may be used to indicate different safety factors, in particular different colours or patterns may be used for different ranked indications in some embodiments.

In an alternative or additional embodiment, modified lane markings, for example solid for "no lane change" and dotted for possible lane changes can be used.

Safety factors relating to the speed of the vehicle may also be presented on a display. In some embodiments, the display can be annotated with a "merge speed" of each candidate area, or with the difference in speed from the current speed of the ego vehicle that would enable a safe manoeuvre to be made. The colour of the annotation may indicate a suggested change of speed of the ego vehicle. The size of the annotation may be selected depending on a suggested change of speed.

In one embodiment an animated colour wash can be used, with an animation of stripes on the colour wash such that a lane whose merge speed is faster than the ego vehicle appears to be moving ahead, and a lane whose merge speed is slower than the ego vehicle appears to be falling behind,

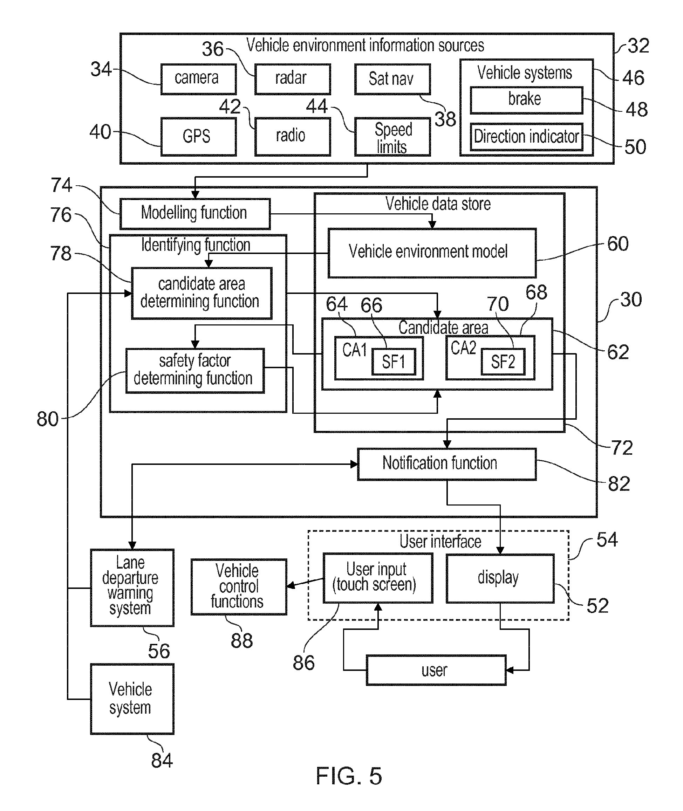

Figure 5 is a block diagram showing one embodiment of an apparatus 30 suitable for implementing the invention in accordance with embodiments of the invention.

The apparatus 30 is coupled to receive vehicle environment information from vehicle environment sources 32. The vehicle environment sources 32 may include one or more of: a camera 34; a radar system 36; a satellite navigation system (Sat Nav system) 38; a Global Positioning System (GPS system) 40; radio communication system 42; speed limit notification system44; or other car systems 46, such as the brake system 48 or a direction indicator system 50.

In some embodiments, the apparatus 30 is also coupled to a display 52 of user interface 54, for displaying information to a user, for example the driver of the vehicle. In some embodiments, the apparatus 30 is coupled to a vehicle system, such as a lane departure warning system 56.

The apparatus 30 is provided with a vehicle environment model store 60 for storing a vehicle environment model. The apparatus 30 is also provided with a candidate area store 62 for storing candidate area records and safety factors for candidate areas of the vehicle environment model. In the illustrated embodiment the candidate area store 62 has a first candidate area record 64 having a safety factor 66 stored therein, and a second candidate area record 68 having a safety factor 70 stored therein.

In the illustrated embodiment the vehicle environment model store 60 and the candidate area store 62 both form part of a vehicle data store 72. However, this is not necessary, and the vehicle environment model store 60 and the candidate area store 62 may be implemented separately or together in any way that seems appropriate to a skilled person.

The apparatus 30 is provided with a modelling function, arranged to receive vehicle environment information from at least one vehicle environment information source 32 and to create a vehicle environment model for a vehicle. The modelling function 74 is coupled to the vehicle environment model store 60 to store vehicle environment model.

The apparatus 30 is provided with a safety factor identifying function 76, coupled to the vehicle environment model store 60 and arranged to identify a safety factor for one or more candidate areas within the vehicle environment model representing respective potential road positions for the vehicle in the vehicle environment. The safety factor identifying function 76 is coupled to the candidate area store 62 to store the identified safety factors for candidate areas.

In embodiments of the invention, the safety factor identifying function 76 is provided with a candidate area determining function 78, arranged to access the vehicle environment model in the vehicle environment model store 60 and to determine candidate areas in the vehicle environment model. The candidate area determining function 78 is coupled to the candidate area store 62 to create a candidate area record 64, 68 in the candidate area store 62.

In embodiments of the invention, the safety factor identifying function 76 is also provided with a safety factor determining function 80, arranged to access the vehicle environment model in the vehicle environment model store 60 and to determine at least one safety factor for at least one candidate area. The safety factor determining function 80 is coupled to the candidate area store 62 to store the at least one safety factor 66, 70 in the respective candidate area record 64, 68.

The apparatus 30 is provided with a notification function 82 coupled to the safety factor store 66, 70 and arranged to providing notification of a safety factor of at least one candidate area in the vehicle environment model.

In some embodiments, the notification function 82 is coupled to the display 52 to provide a notification of at least one safety factor.

Moreover, as will be apparent from a consideration of the above description, in some embodiments the notification function 82 may additionally or alternatively be coupled to other user interface devices (not shown explicitly) that can provide audio communication or haptic communication with a user, for example the driver.

In some embodiments, the notification function 82 is also coupled to a lane departure warning system 56 to provide a notification of a safety factor for a candidate area to the lane departure warning system 56. The lane departure warning system 56 is able to use the safety factor information to enhance or diminish the lane departure warnings, as has been previously discussed.

In some embodiments, the notification function 82 is coupled to a lane departure warning system 56 and arranged to receive a lane departure warning signal from the lane departure warning system 56. The notification function 82 can use lane departure warning information to modify the notification of a safety factor, as has been discussed above. In connection with this, in some embodiments lane departure warning system 56 may be coupled to the candidate area determining function 76 to identify a candidate area corresponding to the lane being entered.

In addition, in some embodiments, a vehicle system 84 such as a turning indicator system may be coupled to the candidate area determining function 78 to provide an indication of a future position of the vehicle to enable the candidate area determining function 78 to identify a candidate area corresponding to the indicated manoeuvre, such as a lane being entered.

In some embodiments, the user interface 54 is provided with a user input 86, to receive input from the user. The user input 86 may in some embodiments be a touch screen and be combined with a visual display 52. The user input 86 may be coupled to a vehicle control function 88 for controlling one or more of the engine control, braking control or steering control of the vehicle so as to cause the vehicle to move to a road position in the vehicle environment corresponding to the candidate area. Thus in one embodiment a safety factor for a candidate area is displayed on a touch screen display, so that the user may select a candidate area, via the touch screen user input 86, and the vehicle may be automatically moved to a road position corresponding to the selected candidate area.

A skilled person will understand that the invention provides a novel method and apparatus. Although embodiments of the invention have primarily been described in the context of an overtaking manoeuvre, it will be apparent that embodiments of the invention may also be used in other contexts, for example for overtaking on single carriageway roads, and for roundabout entry.

Other variations and modifications will be apparent to the skilled person. Such variations and modifications may involve equivalent and other features that are already known and which may be used instead of, or in addition to, features described herein. Features that are described in the context of separate embodiments may be provided in combination in a single embodiment. Conversely, features that are described in the context of a single embodiment may also be provided separately or in any suitable subcombination.

It should be noted that the term "comprising" does not exclude other elements or steps, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present invention.

## Claims

1. A method comprising:
creating, from vehicle environment information sources, a vehicle environment model for a vehicle, the vehicle environment model containing information about road features and information about other vehicles in the vehicle environment;
identifying at least one safety factor for at least one candidate area, representing a respective potential road position of the vehicle in the vehicle environment within the vehicle environment model; and
providing notification of at least one safety factor for at least one candidate area relating to safety of the vehicle moving to the potential road position associated with the candidate area.

2. The method as claimed in claim 1, further comprising:
determining at least one potential future position of the vehicle in the vehicle environment model; and
creating a respective candidate area in the vehicle environment model corresponding to each determined potential future position of the vehicle in the vehicle environment model.

3. The method as claimed in any preceding claim, wherein identifying the at least one safety factor for the at least one candidate area comprises:
determining projected future positions of other vehicles within the vehicle environment model;
evaluating conflict between the projected future positions of other vehicles within the vehicle environment model and the at least one candidate area; and
assigning a safety factor to the at least one candidate area depending on the evaluated conflict.

4. The method as claimed in any preceding claim, wherein the at least one safety factor for the at least one candidate area comprises an indication selected from a set of at least two ranked indications of the desirability of the vehicle moving to a future position.

5. The method as claimed in claim 4, further comprising:
selecting at least one candidate area from a plurality of candidate areas, each having a ranked indications of the desirability of the vehicle moving to a future position, based on the relative ranking of the respective ranked indications; and
providing notification of at least the ranked indication for the selected candidate area.

6. The method as claimed in any preceding claim, wherein the at least one safety factor of the or at least one candidate area comprises an indication of the increase or decrease or maintenance of speed required to enable the vehicle to move to a road position corresponding to the at least one candidate area.

7. The method as claimed in any preceding claim, further comprising
receiving an indication of an intended manoeuvre of the vehicle,
determining an intended candidate area within the vehicle environment model associated with the intended manoeuvre of the vehicle in the vehicle environment; and
providing notification of at least one safety factor of the intended candidate area.

8. The method as claimed in claim 7, further comprising
determining the at least one safety factor of the intended candidate area.

9. The method as claimed in claim 7 or claim 8, where receiving an indication of an intended manoeuvre of the vehicle comprises receiving a lane departure signal from a lane departure warning system.

10. The method as claimed in claim 9, wherein the step of providing notification of the at least one safety factor of the intended candidate area comprises altering the lane departure signal in a manner dependent upon the safety factor of the intended candidate area.

11. The method as claimed in claim 7 or claim 8, where receiving an indication of an intended manoeuvre of the vehicle comprises receiving a lane departure signal from a driver controllable vehicle system.

12. The method as claimed in any preceding claim, where providing notification of the at least one safety factor for at least one candidate area comprises providing a system monitoring lane changes of the vehicle with a notification relating to the at least one safety factor of the candidate area corresponding to a position of the vehicle in an adjacent lane.

13. The method as claimed in any preceding claim, where providing notification of the at least one safety factor of the at least one candidate area comprises displaying information associated with the safety factor to a user.

14. The method as claimed in any preceding claim, further comprising:
receiving a selection of a candidate area; and
automatically operating one or more of the engine control, braking control or steering control of the vehicle so as to cause the vehicle to move to a road position in the vehicle environment corresponding to the selected candidate area.

15. Apparatus comprising:
a vehicle environment model store for storing a vehicle environment model;
a candidate area store for storing safety factors for candidate areas of the vehicle environment model
a modeling function, arranged to receive vehicle environment information from at least one vehicle environment information source and to create a vehicle environment model for a vehicle, the modelling function being coupled to the vehicle environment model store to store vehicle environment model therein;
a safety factor identifying function, coupled to the vehicle environment model store and arranged to identify a safety factor for one or more candidate areas within the vehicle environment model representing respective potential road positions for the vehicle in the vehicle environment, and coupled to the candidate area store to store the identified safety factors for candidate areas; and
a notification function coupled to the safety factor store and arranged to providing notification of a safety factor of at least one candidate area in the vehicle environment model.

16. The apparatus as claimed in claim 15, wherein the safety factor identifying function comprises:
a candidate area determining function, arranged to access the vehicle environment model in the vehicle environment model store and to determine candidate areas in the vehicle environment model; and to create a candidate area record in the candidate area store; and
a safety factor determining function, arranged to access the vehicle environment model in the vehicle environment model store and to determine at least one safety factor for at least one candidate area, and to store the at least one safety factor in the respective candidate area record.
